# EUROPEAN PATENT APPLICATION

(11) **EP 4 332 067 A1**
(43) Date of publication of application: **06.03.2024**
(21) Application number: 22192587.8
(22) Date of filing: 29.08.2022
(51) Int. Cl.: C02F 1/52, C02F 1/56, C02F 1/66, B01D 47/06, B01D 53/14, F01N 3/04, F01N 3/08, C02F 103/18, C02F 1/24, C02F 1/44, C02F 103/08

(54) **SYSTEM AND METHODFOR TREATING A FLUID USED FOR CLEANING EXHAUST GAS**

(71) Applicant: Alfa Laval Corporate AB, 221 00 Lund (SE)
(72) Inventor: GRAM BILDE, Kasper, DK-9530 STØVRING (DK)
(74) Representative: Alfa Laval Attorneys

(57) **Abstract**

A system (5, 53) and a method for treating a fluid used for cleaning exhaust gas from pollutants including particulate matter, is provided. The system (5, 53) comprises a circulation tank (5) for accommodating said fluid, the circulation tank (5) comprising an outlet (23) for bleeding off part of the fluid. The system (5, 53) further comprises first means (9a) for adding a first chemical to said part of the fluid, said first chemical comprising a coagulant, and a separation device (15) for receiving a mixture comprising said part of the fluid and said first chemical, and for separating the mixture into a first fraction and a second fraction, which first fraction contains more particulate matter than the second fraction. The system (5, 53) is characterized in that it further comprises a flocculation arrangement (13, 57) comprising a first flocculator device (29, 65) arranged between the separation device (15) and said first means (9a). The flocculation arrangement (13, 57) is arranged to retain said part of the fluid and said first chemical to promote agglomeration of particulate matter comprised in said part of the fluid before the mixture is received by the separation device (15).

## Description

### Technical Field

The invention relates to a system and a method for treating a fluid used for cleaning exhaust gas from pollutants including particulate matter.

### Background Art

Fossil fuels, such as heavy fuel oil, diesel and LNG, are widely known and used in many different applications. For example, large ships are typically driven by engines operating on fossil fuels. At the combustion of fossil fuels, exhaust gas containing sulphur oxides (SOx) is formed. The exhaust gas typically also contains particulate matter - PM, such as soot, oil and heavy metals, and nitrogen oxides (NOx). In order to reduce the impact of the exhaust gas on the environment, the exhaust gas should be cleaned before it is released into the atmosphere. For example, the exhaust gas could be passed through a scrubber or a wet electrostatic precipitator to be washed with a fluid whereby pollutants in the exhaust gas are caught in the fluid.

The scrubber could be a so-called open loop scrubber, which uses the natural alkalinity of seawater to wash out the sulphur oxides from the exhaust gas. Seawater is then fed from the sea through the scrubber for absorption of SOx and PM from the exhaust gas before it is discharged directly back to the sea. Open loop scrubber operation is prohibited in many ports, inland rivers and near-costal areas.

Alternatively, the scrubber could be a so-called closed loop scrubber which uses a circulating scrubber fluid containing freshwater or seawater in combination with an alkaline agent like sodium hydroxide (NaOH) or sodium carbonate (Na₂CO₃) to wash out sulphur oxides and PM from the exhaust gas. In such a scrubber, the amounts of aqueous sulphite, sulphate salts and PM in the circulating scrubber fluid are gradually increasing. Thus, to control the quality of the circulating scrubber fluid a small amount of it may occasionally or continuously be bled off and replaced by cleaner scrubber fluid. If the scrubber is used onboard a ship, the bled-off scrubber fluid may be stored on the ship or be discharged overboard. Fluid to be discharged overboard must not be too polluted. Therefore, cleaning of the bled-off scrubber fluid before it is released into the surrounding waters is typically necessary.

US20130157833 describes an exhaust gas scrubber fluid cleaning apparatus comprising a centrifugal separator for separating polluted scrubber fluid into a pollutant phase, which contains most of the PM, and cleaned scrubber fluid. Although this exhaust gas cleaning equipment functions well, it may not be capable of treating the separated polluted scrubber fluid so effective that cleaned scrubber fluid, sufficiently free from PM to be discharged overboard, is achieved. If the cleaned scrubber fluid cannot be discharged overboard, it must be stored on board the ship for later discharge.

### Summary

An object of the present invention is to provide a system and a method for treating a fluid used for cleaning exhaust gas from pollutants including particulate matter, PM, that at least partly solve the above mentioned problem. The basic concept of the invention is to ensure that PM in the fluid can form relatively large particle aggregates to facilitate removal of the PM from the fluid. The system and the method according to the invention are defined in the appended claims and discussed below.

A system according to the invention comprises a circulation tank for accommodating the fluid used for cleaning exhaust gas from pollutants including PM, which circulation tank has an outlet for bleeding off part of the fluid. The system further comprises first means for adding, downstream the outlet of the circulation tank, a first chemical to the bled-off part of the fluid, the first chemical comprising a coagulant. Also, the system comprises a separation device which has an inlet arranged downstream the chemical adding first means. The separation device is arranged to receive a mixture comprising the bled-off part of the fluid and the first chemical, and to separate the mixture into a first fraction and a second fraction, which first fraction contains more PM than the second fraction. The system is characterized in that it further comprises a flocculation arrangement which includes a first flocculator device arranged upstream said inlet of the separation device and downstream the chemical adding first means. The flocculation arrangement is arranged to retain the bled-off part of the fluid and the first chemical to promote agglomeration of PM comprised in the bled-off part of the fluid before the mixture is received by the separation device.

By "upstream" is meant "before" as seen in a flow direction of the fluid through the system. Similarly, by "downstream" is meant "after" as seen in a flow direction of the fluid through the system.

The system could be arranged for treating a fluid used for cleaning exhaust gas from a marine engine onboard a ship, a marine burner onboard a ship or a marine boiler onboard a ship.

The fluid may comprise fresh water and/or sea water.

Any suitable coagulant could be used in the system, for example a metal coagulant such as aluminium chloride, iron chloride or sodium aluminate.

Any suitable separation device could be used in the system, for example a high speed separator, a settling pond, a flotation device or possibly a membrane, or any combination of these.

The chemical adding first means may be arranged in different positions, for example upstream the first flocculator device and possibly also upstream the flocculation arrangement.

As said above, the separation device is arranged to separate the mixture into a more polluted first fraction and a cleaner second fraction. The first fraction may be removed from the system and stored in a sludge tank or similar for later disposal, while the second fraction may be discharged, possibly overboard in marine applications, and/or returned to the circulation tank as a fluid refill. The separation device may use density and particle size differences for performing the separation and concentrating the PM in the first fraction. Typically, the PM has a relatively small particle size and the particle volume fraction is relatively small. These two factors may make the separation device efficiency low. Addition of coagulant to PM containing fluid causes PM agglomeration, i.e. formation of relatively large and heavy PM aggregates which may be easier to separate from the rest of the fluid. The coagulant addition may therefore improve the efficiency of the separation device.

The fact that the coagulant is supplied "in-line" to the bled-off part of the fluid downstream the circulation tank, instead of upstream the circulation tank or in the circulation tank, is advantageous. First of all, this coagulant dosing point means that coagulant is added precisely where it is needed, i.e. to only the fluid fraction to be treated by the separation device. Second of all, since the coagulant is arranged to adhere to the PM in the fluid, it is also arranged to end up mainly in the first fraction. Therefore, the coagulant dosing point according to the invention results in less chemicals being circulated through the complete system, which in turn may decrease the risk of fouling and blocking of various system components, such as spray nozzles and heat exchangers. Third of all, with this coagulant dosing point, the PM agglomeration will mainly take place between the circulation tank and the separation device, i.e. at an optimum location in the system offering minimum break-down of formed aggregates.

In that the system comprises a flocculation arrangement, the PM agglomeration is facilitated. The flocculation arrangement provides a controlled environment which offers a retention time sufficient for PM to agglomerate into larger aggregates. The fact that the first flocculator device is arranged "in-line" between the separation device and the chemical adding first means is advantageous. First of all, this first flocculator device position means that PM agglomeration is promoted precisely where it is needed, i.e. for only the fluid fraction to be treated by the separation device. Second of all, with this first flocculator device position, the PM agglomeration will mainly take place between the circulation tank and the separation device, i.e. at an optimum location in the system offering minimum break-down of formed aggregates. Thereby, a strong and stable PM agglomeration just before the separation device is ensured which promotes an increased efficiency of the separation device and also a decreased amount of chemicals being circulated through the complete system, which in turn may decrease the risk of fouling and blocking of various system components.

Thus, the system according to the invention provides a fluid in-line treatment, involving coagulant dosing and fluid retention, that enables improved control of the agglomeration process and, consequently, an effective separation by the separation device resulting in a concentrated dirty first fraction, which may be stored for later disposal, and a cleaner second fraction, which is sufficiently free from PM to be discharged, possibly overboard for a system used in a marine application.

The system may comprise a first mixer device arranged upstream the first flocculator device and downstream the outlet of the circulation tank. The mixer device may be arranged to disperse the first chemical in the bled-off part of the fluid. This may ensure a homogeneous chemical distribution, and thereby an optimum PM agglomeration, in the bled-off part of the fluid.

The first mixer device could be arranged downstream the chemical adding first means. Alternatively, the first mixer device and the chemical adding first means could be "aligned", i.e. arranged at the same location seen in the flow direction of the bled-off part of the fluid, in other words, the chemical adding first means could be connected to the first mixer device, for supply of the first chemical directly into the first mixer device. The first mixer device may be of any suitable type. For example, the first mixer device may be static, i.e. lack moving components, to enable a stable and rapid and, thus, effective chemical dispersion in the bled-off part of the fluid which promotes subsequent PM agglomeration. A static first mixer device may have any suitable configuration. As an example, a static first mixer device may be achieved by a local reduction of a flow through area, e.g. a locally decreased inner dimension or a partial obstruction, of a connection between the outlet of the circulation tank and inlet of the separation device. As another example, a static first mixer device may be an extrusion static mixer, i.e. be achieved by locally arranging one or more plates or baffles inside the connection between the outlet of the circulation tank and inlet of the separation device.

The first flocculator device may be of any suitable type. For example, the first flocculator device may be static or hydraulic, i.e. lack moving components, to enable a stable and gentle but still effective PM agglomeration in the bled-off part of the fluid . A static first flocculator device may have any suitable configuration. As an example, as will be further discussed below, a static first flocculator device may comprise a portion of a pipe of the flocculation arrangement, which pipe comprises one or more bends. As another example, a static first flocculator device may comprise a flow-through tank or chamber.

The system may further comprise second means for adding, downstream the outlet of the circulation tank and upstream the inlet of the separation device, a second chemical to the bled-off part of the fluid. The second chemical may comprise a flocculant to further promote PM agglomeration in the bled-off part of the fluid. Any suitable flocculant could be used in the system, for example a polymer flocculant of anionic, cationic or nonionic type with different characteristics as regards, for example, physical length, coupling and strenght.

The chemical adding second means may be arranged in different positions. As an example, the second means may be arranged upstream the first flocculator device and possibly also upstream the flocculation arrangement. Further, the second means may be connected to the first mixer device, for supply of the second chemical directly into the first mixer device.

The system may further comprise third means for adding, downstream the outlet of the circulation tank and upstream the inlet of the separation device, a third chemical to the bled-off part of the fluid. The third chemical may comprise an alkaline agent for obtaining a pH of the bled-off part of the fluid of between 6 and 8. Such a pH may promote PM agglomeration in the bled-off part of the fluid. Any suitable alkaline agent could be used in the system, for example sodium hydroxide and/or magnesium hydroxide.

The chemical adding third means may be arranged in different positions. As an example, the third means may be arranged upstream the first flocculator device and possibly also upstream the flocculation arrangement. Further, the third means may be arranged upstream the first mixer device, upstream or downstream a pump for feeding fluid to be bled-off from the circulation tank.

Supply of flocculant and/or alkaline agent "in-line" to the bled-off part of the fluid downstream the circulation tank is advantegous for the same reasons as given above for the supply of coagulant.

The chemical adding first, second and third means may be of any suitable type. For example, each of the first, second and third means may include a tank, a conduit extending from the tank for feeding the first chemical, the second chemical and the third chemical, respectively, from the respective tank to the bled-off part of the fluid, and one or more valves for regulating a respective chemical flow through the respective conduit.

The flocculation arrangement may, in a normal state of use of the system, have a width and a height, which height exceeds the width. In this context, it is the maximum width and the maximum height that are meant. Such a configuration of the flocculation arrangement may minimize the footprint of the system, which is advantageous in applications where space is scarce, for example onboard ships.

As mentioned above, the flocculation arrangement may comprise a pipe including a plurality of pipe portions, wherein the pipe is bent such that the pipe portions at least partly extend along each other. The first flocculator device may comprise a first pipe portion of the pipe portions. The pipe may be continuous or, alternatively, discontinuous or intermittent so as to allow integration of other components, such as the first mixer device, and possibly additional mixer devices. The pipe may be bent in different ways. For example, it may be bent a plurality of times 90 degrees in the horizontal plane and slightly upwards in the vertical plane so as to form a coil or spiral with rounded rectangular cross section. As another example, it may be bent a plurality of times 180 degrees in the horizontal plane and slightly upwards in the vertical plane so as to form a coil or spiral with elongate cross section. As a final example, it may be bent a plurality of times 360 degrees in the horizontal plane and slightly upwards in the vertical plane to form a coil with circular cross section, a so-called helicoil. A helicoil design is beneficial since it allows manufacturing of the flocculation arrangement at a relatively low cost. Further, a helicoil design is compact and allows for easier integration with existing equipment. Also, the constant curvature of the helicoil design promotes PM agglomeration.

A method according to the invention is for treating a fluid used for cleaning exhaust gas from pollutants including PM. The method comprises the following steps:
accommodating the fluid in a circulation tank,
bleeding off part of the fluid from the circulation tank through an outlet of the circulation tank,
adding, through first means, downstream the outlet of the circulation tank, a first chemical to the bled-off part of the fluid, the first chemical comprising a coagulant,
receiving, in a separation device, through an inlet of the separation device arranged downstream the first means, a mixture comprising the bled-off part of the fluid and the first chemical, and
separating, by means of the separation device, the mixture into a first fraction and a second fraction, which first fraction contains more PM than the second fraction.

The method is characterized in that it further comprises the step of
conveying the bled-off part of the fluid and the first chemical through a flocculation arrangement comprising a first flocculator device arranged upstream the inlet of the separation device and downstream the first means, which flocculation arrangement is arranged to retain the bled-off part of the fluid and the first chemical to promote agglomeration of PM comprised in the bled-off part of the fluid before the mixture is received in the separation device.

The method may further comprise the step of mixing, in a first mixer device arranged upstream the first flocculator device and downstream the outlet of the circulation tank, the first chemical and the bled-off part of the fluid.

In line with the above, the first mixer device may be static, and/or the first flocculator device may be static.

The method may further comprise the step of adding, through second means, downstream the outlet of the circulation tank and upstream the inlet of the separation device, a second chemical to the bled-off part of the fluid, which second chemical comprisies a flocculant.

The method may further comprise the step of adding, through third means, downstream the outlet of the circulation tank and upstream the inlet of the separation device, a third chemical to the bled-off part of the fluid, which third chemical comprises an alkaline agent for obtaining a pH of the bled-off part of the fluid of between 6 and 8.

In line with the above, the flocculation arrangement may comprise a pipe comprising a plurality of pipe portions, the pipe being bent such that the pipe portions at least partly extend along each other. The first flocculator device may comprise a first pipe portion of the pipe portions.

The steps of the method may or may not be performed in the order given above.

The above discussed advantages of the different embodiments of the system according to the invention are also present for the corresponding different embodiments of the method according to the present invention.

Still other objectives, features, aspects and advantages of the invention will appear from the following detailed description as well as from the drawings.

### Brief Description of the Drawings

The invention will now be described in more detail with reference to the appended schematic drawings, in which
Fig. 1 is a block diagram schematically illustrating a system according to the invention,
Fig. 2a is a first side view of a part of the system in Fig. 1,
Fig. 2b is a view from above of the part in Fig. 2a,
Fig. 2c is a second side view of the part in Fig. 2a,
Fig. 3 is a flow chart illustrating a method for cleaning exhaust gas according to the invention,
Fig. 4a corresponds to Fig. 2a and illustrates a first alternative embodiment of the relevant part,
Fig. 4b corresponds to Fig. 2b and illustrates the first alternative embodiment of the relevant part,
Fig. 4c corresponds to Fig. 2c and illustrates the first alternative embodiment of the relevant part,
Fig. 5a corresponds to Fig. 2a and illustrates a second alternative embodiment of the relevant part,
Fig. 5b corresponds to Fig. 2b and illustrates the second alternative embodiment of the relevant part,
Fig. 5c corresponds to Fig. 2c and illustrates the second alternative embodiment of the relevant part,
Fig. 6 is a block diagram schematically illustrating a system according to an alternative embodiment of the invention,
Fig. 7a is a first side view of a part of the system in Fig. 6,
Fig. 7b is a view from above of the part in Fig. 7a, and
   Fig. 7c is a second side view of the part in Fig. 7a.

### Detailed Description

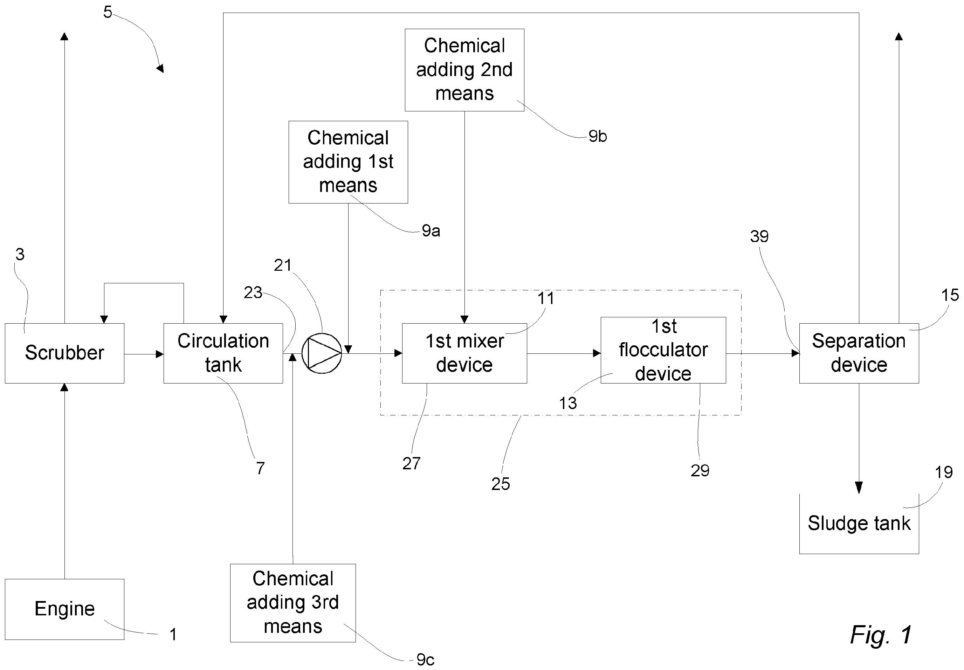

Fig. 1 illustrates an engine 1 for propelling a ship (not illustrated), which engine 1 produces exhaust gas containing pollutants including particulate matter, PM. Further, Fig. 1 illustrates a scrubber 3 through which the exhaust gas from the engine 1 is fed to be washed with a circulating fluid which absorbs the pollutants from the exhaust gas, and a system 5 for treating the fluid, more particularly cleaning the fluid from PM. The system 5 comprises a circulation tank 7, first, second and third means 9a, 9b and 9c for supply of a first, a second and a third chemical, respectively, a mixing arrangement 11 (which here equals a first mixer device), a flocculation arrangement 13 (which here equals a first flocculator device) and a separation device 15. The chemical supply first, second and third means 9a, 9b and 9c together with the mixing arrangement 11 and the flocculation arrangement 13, forms a pre-treatment arrangement for fluid treatment upstream the separation device 15. Fig. 1 also illustrates a sludge tank 19 communicating with the separation device 15.

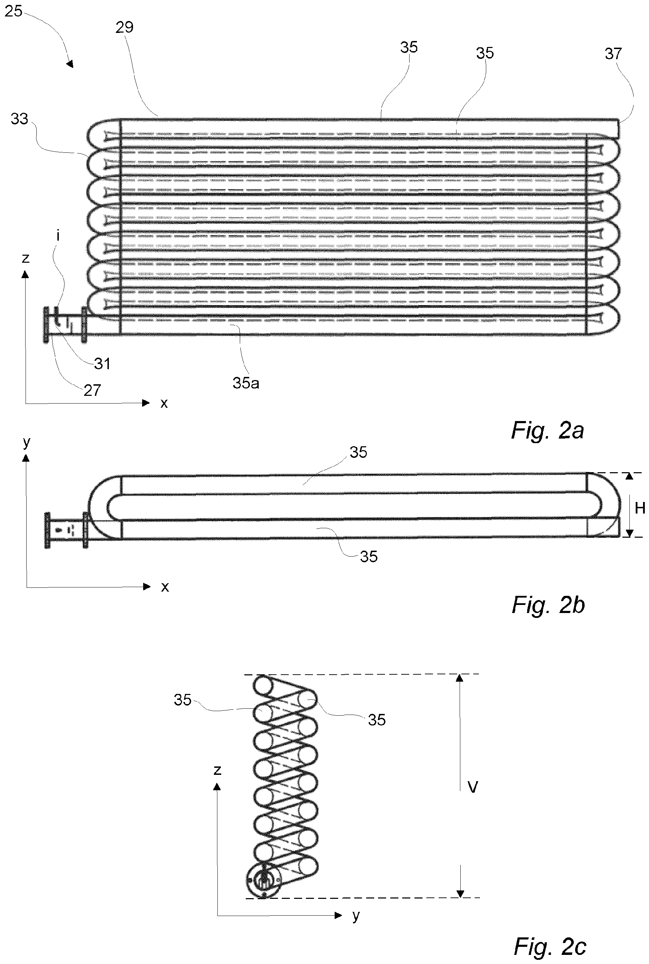

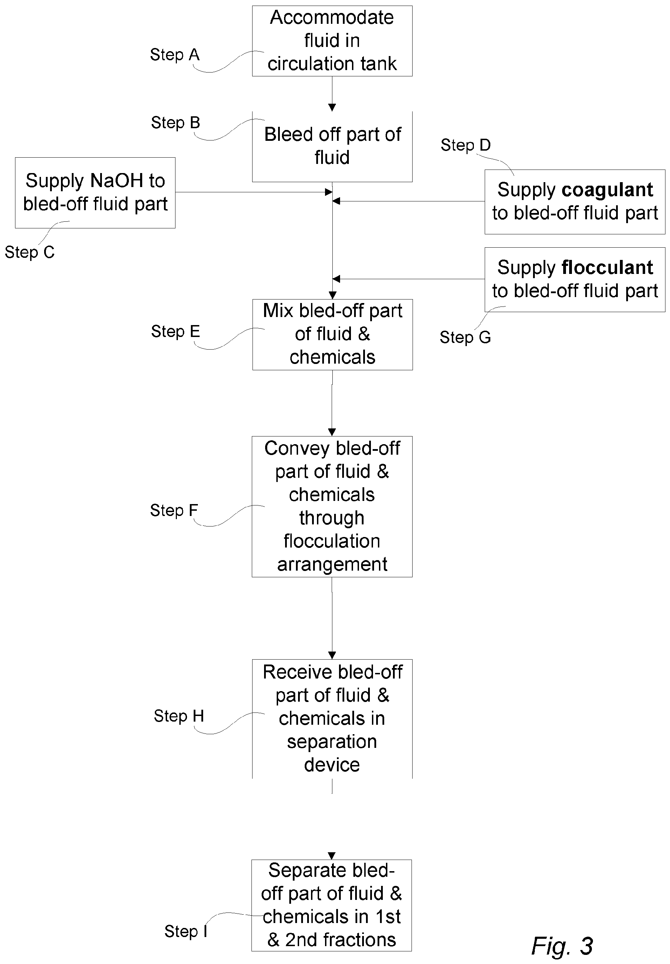

Fig. 3 illustrates a method for treating the fluid, more particularly cleaning the fluid from PM, by means of the system 5 in Fig. 1. The fluid circulating through the scrubber 3 is accommodated in the circulation tank 7 (Step A). Continuously, or intermittently at regular time intervals, a part of the fluid is pumped, by means of a pump 21, through an outlet 23 of the circulation tank 7 to be bled off from the circulation tank 7 (Step B). The third chemical comprising sodium hydroxide is supplied to the bled-off part of the fluid (Step C) upstream the pump 21 by means of the chemical supply third means 9c. The dosing of the third chemical is such that a pH of between 6 and 8 (preferably around 6,4 for most effective PM agglomeration) is achieved in the bled-off part of the fluid. Similarly, the first chemical comprising polyaluminium chlorideis supplied to the bled-off part of the fluid (Step D) downstream the pump 21 by means of the chemical supply first means 9a. As seen in a flow direction of the bled-off part of the fluid, the sodium hydroxide and the polyaluminium chloride could be supplied at different locations, as illustrated in Figs. 1 and 3, or, as an alternative, at the same location. The chemicals containing bled-off fluid is conveyed through the mixing arrangement 11 for mixing the chemicals and the bled-off fluid (Step E), and through the flocculation arrangement 13 (Step F), which mixing arrangement 11 and flocculation arrangement 13 are illustrated in Figs. 2a, 2b and 2c.

As is clear from Figs. 2a, 2b and 2c, the mixing arrangement 11 and the flocculation arrangement 13 are integrated into one unit 25. With reference also again to Fig. 1, the mixing arrangement 11 comprises a first mixer device 27 connected to a first flocculator device 29 comprised in the flocculation arrangement 13. Further, the first mixer device 27 is, at 'i', connected to the chemical supply second means 9b for supply of the second chemical comprising a cationic polymer flocculant to the bled-off part of the fluid (Step G). The first mixer device 27 is static and comprises a flanged pipe 31 and fluid velocity and turbulence increasing baffles (not illustrated) arranged inside the pipe for effectively and uniformly dispersing the first, second and third chemicals in the bled-off part of the fluid so as to form a mixture. The first flocculator device 29 is static and comprises a flanged pipe 33 which, in turn, comprises a plurality (here 15) of integrally formed pipe portions 35. A first pipe portion 35a of the pipe portions 35 is connected to the first mixer device 27. The pipe 33 is bent a plurality of times (here 14) 180 degrees in the x-y plane (Fig. 2b) and slightly upwards in the z direction (Fig. 2c) to form a coil and such that the pipe portions 35, along part of their lengths, extend along and parallel to eachother. The pipe portions 35 are so dimensioned that the first flocculator device 29, and thus the flocculation arrangement 13, has a width Wand height H. The height H substantially exceeds the width W which is relatively small so as to give the the flocculation arrangement 13 a small footprint.

As said above, the first chemical is supplied to the bled-off part of the fluid before the first mixer device 27. The presence of the pump 21 creates highly turbulent conditions before the first mixer device 27 which are suitable to achieve a homogenous coagulant distribution in the bled-off part of the fluid. After the coagulant supply, PM in the bled-off part of the fluid starts to form small PM aggregates. Then, the second chemical is supplied to the bled-off part of the fluid inside the first mixer device 27 to achieve a homogenous flocculant distribution in the bled-off part of the fluid. The resulting mixture is conveyed from the first mixer device 27 to the flocculation arrangement 13, which here equals the first flocculator device 29. Inside the flocculation arrangement 13, the PM agglomeration continues to form more and larger PM aggregates. The length of the pipe 33, and the number of bends of the pipe 33, are chosen such that the mixture is retained by the flocculation arrangement 13 for an optimum time. This optimum time results in steady state agglomeration at an outlet 37 of the flocculation arrangement 13, which means that PM aggregates are formed and broken down at the same rate.

With reference again to Fig. 1, the mixture now containing agglomerated PM or PM aggregates is conveyed from the flocculation arrangement 13 and received in the separation device 15 through an inlet 39 thereof (Step H). Here, the separation device 15 is a high speed separator. The separation service 15 separates the mixture into a first fraction and a second fraction (Step I). Due to the inventive unique in-line treatment of the bled-off fluid before it is fed to the separation device 15, the PM agglomeration, and thus the efficiency of the separation device 15, can be optimized. Consequently, the first fraction will contain most of the PM and chemicals, while the second fraction will contain very little PM and chemicals, typically little enough to be discharged overboard, of course depending on local circumstances. Accordingly, the first fraction is fed from the separation device 15 to the sludge tank 19 for later handling. The second fraction is discharged overboard or returned to the circulation tank 7, possibly after a quality control by means of equipment not illustrated in the figures.

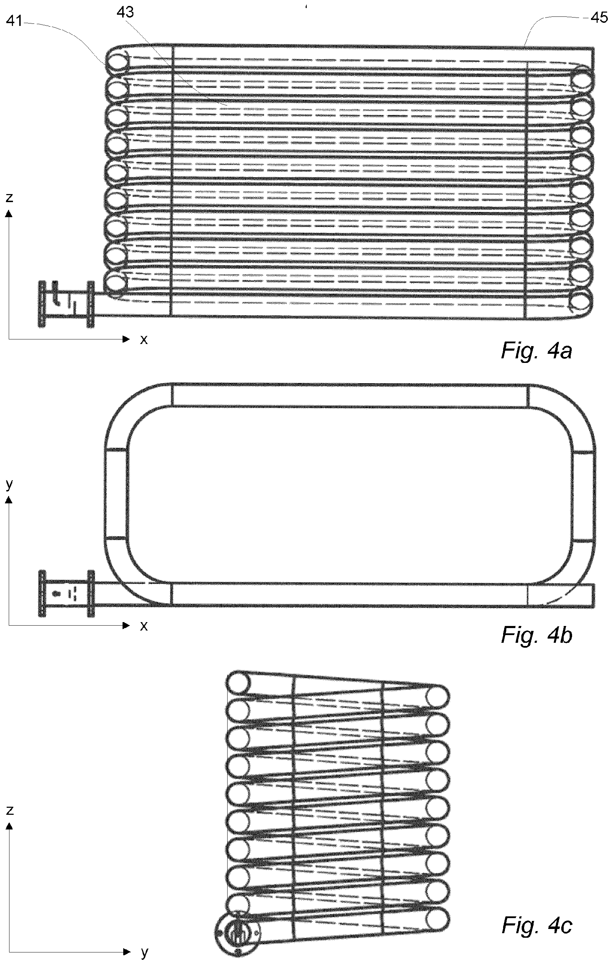

Figs. 4a, 4b and 4c illustrates an alternative design of the flocculation arrangement, denoted 41, of the system 5 illustrated in Fig. 1. The flocculation arrangement 41 mainly differs from the flocculation arrangement 13 in that it includes a first flocculator device 43 comprising a flanged pipe 45 which is bent a plurality of times 90 degrees in the x-y plane (Fig. 4b) and slightly upwards in the z direction (Fig. 4c) to form a coil.

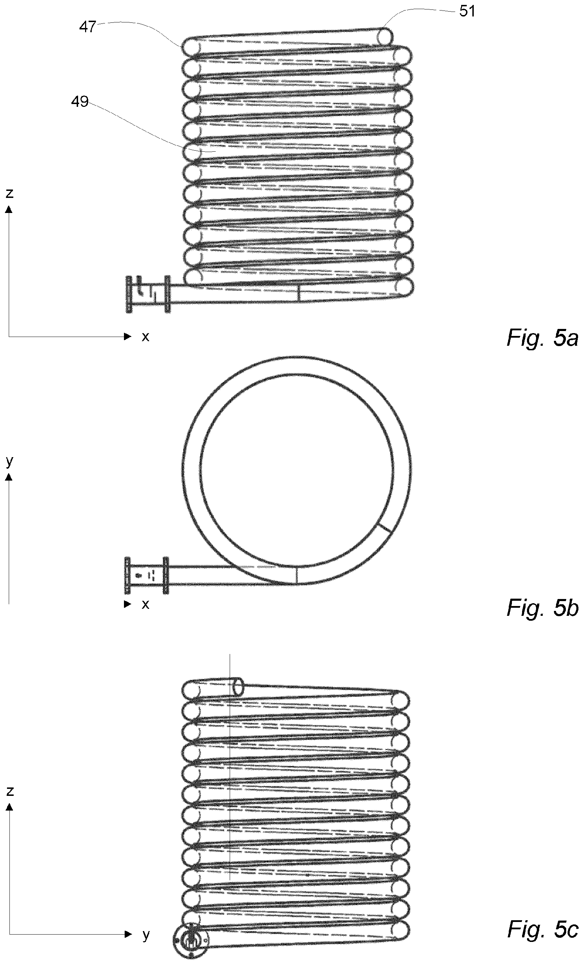

Figs. 5a, 5b and 5c illustrates yet an alternative design of the flocculation arrangement, denoted 47, of the system 5 illustrated in Fig. 1. The flocculation arrangement 47 mainly differs from the flocculation arrangement 13 in that it includes a first flocculator device 49 comprising a flanged pipe 51 which is bent a plurality of times 360 degrees in the x-y plane (Fig. 5b) and slightly upwards in the z direction (Fig. 5c) to form a coil.

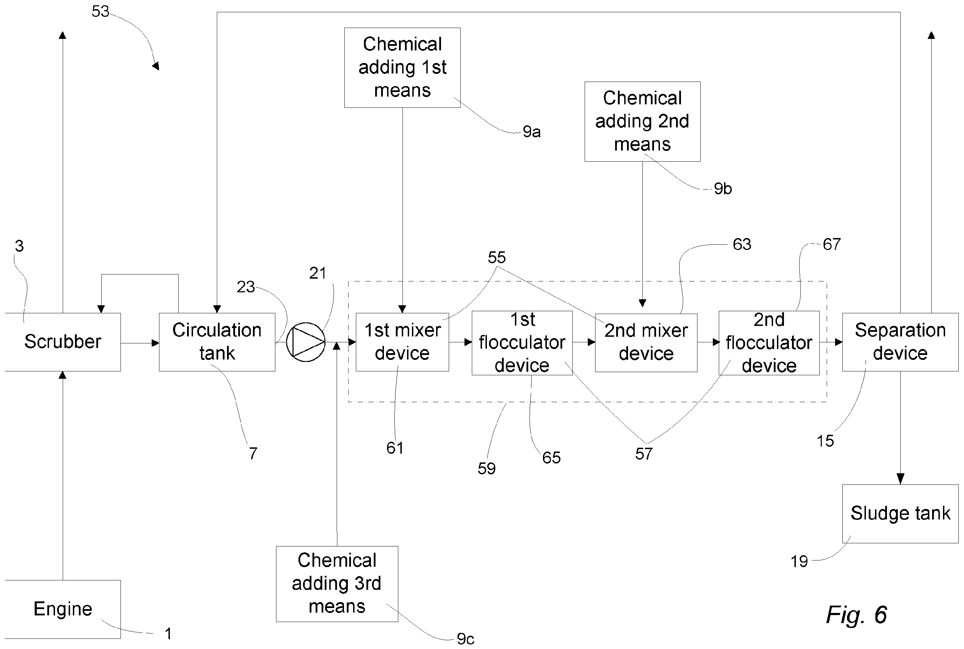

Fig. 6 corresponds to Fig. 1 but illustrates an alternative embodiment of the system, denoted 53, for treating the fluid. Hereinafter, the features distinguishing the system 53 from the system 5 will be focused on.

The system 53 comprises a circulation tank 7, first, second and third means 9a, 9b and 9c for supply of a first, a second and a third chemical, respectively, a mixing arrangement 55 (which here is formed of first and second mixer devices), a flocculation arrangement 57 (which here is formed of first and second flocculator devices) and a separation device 15. The chemical supply first, second and third means 9a, 9b and 9c together with the mixing arrangement 55 and the flocculation arrangement 57, form a pre-treatment arrangement for fluid treatment upstream the separation device 15.

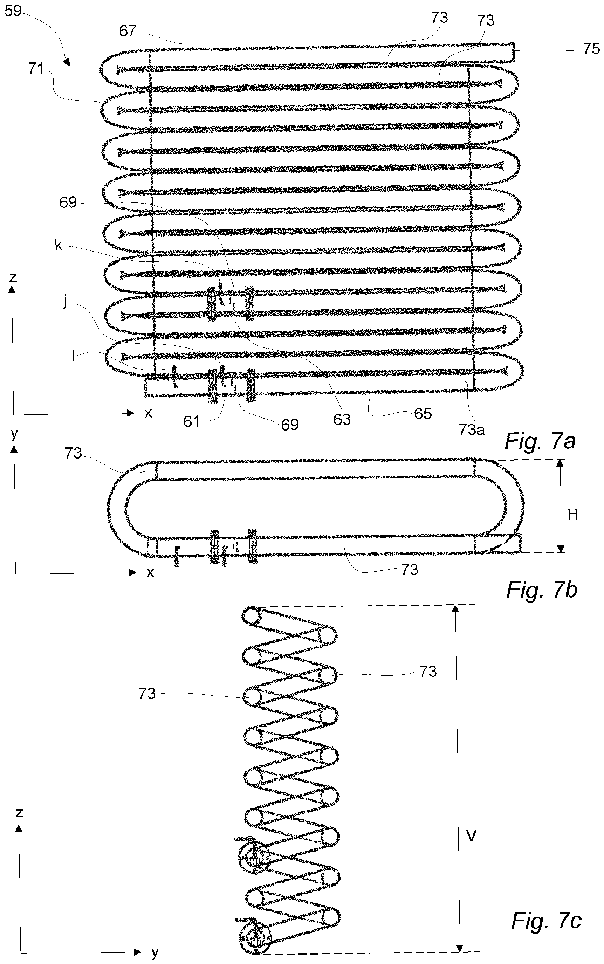

Fluid to be treated by the system 53 is pumped, by means of a pump 21, through an outlet 23 of the circulation tank 7 to be bled off from the circulation tank 7. The third chemical comprising sodium hydroxide is supplied to the bled-off part of the fluid downstream the pump 21 by means of the chemical supply third means 9c to achieve a pH of between 6 and 8 therein. The chemicals containing bled-off fluid is conveyed through the mixing arrangement 55 for mixing the chemicals and the bled-off fluid, and through the flocculation arrangement 57, which mixing arrangement 55 and flocculation arrangement 57 are illustrated in Figs. 7a, 7b and 7c.

As is clear from Figs. 7a, 7b and 7c, the mixing arrangement 55 and the flocculation arrangement 57 are integrated into one unit 59. With reference also again to Fig. 6, the mixing arrangement 55 is intermittent and comprises a first mixer device 61 and a second mixer device 63, while the flocculation arrangement 57 is intermittent and comprises a first flocculator device 65 and a second flocculator device 67. The first mixer device 61 is connected to the first flocculator device 65, which in turn is connected to the second mixer device 63, which in turn is connected to the second flocculator device 67. Further, the first mixer device 61 is, at 'j', connected to the chemical supply first means 9a for supply of the second chemical comprising coagulant to the bled-off part of the fluid. Similarly, the second mixer device 63 is, at 'k', connected to the chemical supply second means 9b for supply of the second chemical comprising flocculant to the bled-off part of the fluid. In Figs. 7a, 7b and 7c also the location for supply of the third chemical comprising sodium hydroxide is illustrated at 'I'.

Each of the first and second mixer devices 61 and 62 are static and comprises a flanged pipe 69 and fluid velocity and turbulence increasing baffles (not illustrated) arranged inside the pipe for effective and uniform chemical dispersion in the bled-off part of the fluid so as to form a mixture. The flocculation arrangement 57 is static and comprises flanged pipe 71. The pipe 71 comprises a plurality (here 18) of integrally formed pipe portions 73, of which some (here 5) are comprised in the first flocculator device 65 and some (here 13) are comprised in the second flocculator device 67. A first pipe portion 73a of the pipe portions 73 is comprised in the the first flocculator device 65 and connected to the first mixer device 61. The pipe 71 is bent a plurality of times (here 16, 4 within the first flocculator device 65 and 12 within the second flocculator device 67) 180 degrees in the x-y plane (Fig. 7b) and slightly upwards in the z direction (Fig. 7c) to form a coil (together with the second mixer device 63) and such that the pipe portions 73, along part of their lengths, extend along and parallel to each other. The pipe portions 73 are so dimensioned that the flocculation arrangement 57 has a width Wand height H. The height H substantially exceeds the width W which is relatively small so as to give the flocculation arrangement 57 a small footprint.

The first chemical is supplied to the bled-off part of the fluid inside the first mixer device 61 to achieve a homogenous coagulant distribution in the bled-off part of the fluid. The resulting mixture is conveyed from the first mixer device 61 to the first flocculator device 65 where small PM aggregates are formed. Then, the second chemical is supplied to the bled-off part of the fluid inside the second mixer device 63 to achieve a homogenous flocculant distribution in the bled-off part of the fluid. The resulting mixture is conveyed from the second mixer device 63 to the second flocculator device 67 where more and larger PM aggregates are formed. The length of the pipe 73, and the number of bends of the pipe 73, are chosen such that the mixture is retained by the flocculation arrangement 57 for an optimum time. This optimum time results in steady state agglomeration at an outlet 75 of the flocculation arrangement 57.

With reference again to Fig. 6, the mixture now containing agglomerated PM or PM aggregates is conveyed from the flocculation arrangement 57 to the separation device 15 to be separated into a dirtier first fraction and a cleaner second fraction.

Herein, by mixture is meant any kind of mix of the bled-off fluid and one or more of the first, second and third chemicals, possibly containing agglomerated PM.

It should be stressed that all components necessary to make the system work properly, such as valves, pumps, sensors, pipes, connections, dosing equipment, etc., are not described herein or illustrated in the figures.

The above described embodiment of the present invention should only be seen as an example. A person skilled in the art realizes that the embodiment discussed can be varied in a number of ways without deviating from the inventive conception.

As an example, the system need not comprise three chemical adding means for supply of three different chemicals but could comprise more or less than three chemical adding means for supply of three or more or less than three different chemicals. For example, the system could be designed without means for adding alkaline agent.

The number and location of the dosing points for the chemicals need not be as illustrated in the figures and described above. As an example, all chemicals could be supplied in one of the mixer devices of the system.

The system need not comprise either one or two mixer devices but could comprise any number of mixer devices.

Similarly, the system need not comprise either one or two flocculator devices but could comprise any number of flocculator devices.

The first and second flocculator devices need not be configured as illustrated in the figures and described above but could comprise any suitable number of bends and pipe portions.

It should be stressed that the attributes first, second, third, ..., and A, B, C, ..., etc. are used herein just to distinguish between species of the same kind and not to express any kind of mutual order between the species.

It should be stressed that "communicating" and "communication", throughout the text, mean "communicating directly or indirectly" and "direct or indirect communication", respectively. Similarly, "receiving", "feeding", etc., throughout the text, means "receiving directly or indirectly" and "feeding directly or indirectly", respectively.

It should be stressed that a description of details not relevant to the present invention has been omitted and that the figures are just schematic and not drawn according to scale. It should also be said that some of the figures have been more simplified than others. Therefore, some components may be illustrated in one figure but left out on another figure.

## Claims

1. A system (5, 53) for treating a fluid used for cleaning exhaust gas from pollutants including particulate matter, comprising
a circulation tank (7) for accommodating said fluid, said circulation tank (5) comprising an outlet (23) for bleeding off part of the fluid,
first means (9a) for adding, downstream said outlet (23) of the circulation tank (7), a first chemical to said part of the fluid, said first chemical comprising a coagulant, and
a separation device (15) comprising an inlet (39) arranged downstream said first means (9a), which separation device (15) is arranged for receiving a mixture comprising said part of the fluid and said first chemical, and for separating the mixture into a first fraction and a second fraction, which first fraction contains more particulate matter than the second fraction,
**characterized in that** it further comprises
a flocculation arrangement (13, 57) comprising a first flocculator device (29, 65) arranged upstream said inlet (39) of the separation device (15) and downstream said first means (9a), which flocculation arrangement (13, 57) is arranged to retain said part of the fluid and said first chemical to promote agglomeration of particulate matter comprised in said part of the fluid before the mixture is received by the separation device (15).

2. A system (5, 53) according to claim 1, further comprising a first mixer device (27, 61) arranged upstream said first flocculator device (29, 65) and downstream the outlet (23) of the circulation tank (7), which first mixer device (27, 61) is arranged to disperse said first chemical in said part of the fluid.

3. A system (5, 53) according to claim 2, wherein the first mixer device (27, 61) is static.

4. A system (5, 53) according to any of the preceding claims, wherein the first flocculator device (29, 65) is static.

5. A system (5, 53) according to any of the preceding claims, further comprising second means (9b) for adding, downstream said outlet (23) of the circulation tank (7) and upstream said inlet (39) of the separation device (15), a second chemical to said part of the fluid, said second chemical comprising a flocculant.

6. A system (5, 53) according to any of the preceding claims, further comprising third means (9c) for adding, downstream said outlet (23) of the circulation tank (7) and upstream said inlet (39) of the separation device (15), a third chemical to said part of the fluid, said third chemical comprising an alkaline agent for obtaining a pH of said part of the fluid of between 6 and 8.

7. A system (5, 53) according to any of the preceding claims, wherein the flocculation arrangement (13, 57), in a normal state of use of the system (5), has a width (W) and a height (H), the height (H) exceeding the width (W).

8. A system (5, 53) according to claim 7, wherein the flocculation arrangement (13, 57) comprises a pipe (33, 71) comprising a plurality of pipe portions (35, 73), wherein said pipe (33, 71) is bent such that said pipe portions (35, 73) at least partly extend along each other, and the first flocculator device (29, 65) comprises a first pipe portion (35a, 73a) of said pipe portions (35, 73).

9. A method for treating a fluid used for cleaning exhaust gas from pollutants including particulate matter, comprising
accommodating said fluid in a circulation tank (7) (Step A),
bleeding off part of the fluid from the circulation tank (7) through an outlet (23) of the circulation tank (7) (Step B),
adding, through first means (9a), downstream said outlet of the circulation tank, (7) a first chemical to said part of the fluid, said first chemical comprising a coagulant (Step D),
receiving, in a separation device (15), through an inlet (39) of the separation device (15) arranged downstream said first means (9a), a mixture comprising said part of the fluid and said first chemical (Step H), and
separating, by means of the separation device (15), the mixture into a first fraction and a second fraction, which first fraction contains more particulate matter than the second fraction (Step I),
**characterized in that** it further comprises
conveying said part of the fluid and said first chemical through a flocculation arrangement (13, 57) comprising a first flocculator device (29, 65) arranged upstream said inlet of the separation device (15) and downstream said first means (9a), which flocculation arrangement (13, 57) is arranged to retain said part of the fluid and said first chemical to promote agglomeration of particulate matter comprised in said part of the fluid before the mixture is received in the separation device (15) (Step F).

10. A method according to claim 9, further comprising mixing, in a first mixer device (27, 61) arranged upstream said first flocculator device (29, 65) and downstream the outlet (23) of the circulation tank (7), said first chemical and said part of the fluid (Step E).

11. A method according to any of claims 9-10, wherein the first mixer device (27, 61) is static.

12. A method according to any of claims 9-11, wherein the first flocculator device (29, 65) is static.

13. A method according to any of claims 9-12, further comprising adding, through second means (9b), downstream said outlet (23) of the circulation tank (7) and upstream said inlet (39) of the separation device (15), a second chemical to said part of the fluid, said second chemical comprising a flocculant (Step G).

14. A method according to any of claims 9-13, further comprising adding, through third means (9c), downstream said outlet (23) of the circulation tank (7) and upstream said inlet (39) of the separation device (15), a third chemical to said part of the fluid, said third chemical comprising an alkaline agent for obtaining a pH of said part of the fluid of between 6 and 8 (Step C).

15. A method according to any of claims 9-14, wherein the flocculation arrangement (13, 57) comprises a pipe (33, 71) comprising a plurality of pipe portions (35, 73), wherein said pipe (33, 71) is bent such that said pipe portions (35, 73) at least partly extend along each other, and the first flocculator device (29, 65) comprises a first pipe portion (35a, 73a) of said pipe portions (35, 73).
